# EUROPEAN PATENT APPLICATION

(11) **EP 3 309 531 A1**
(43) Date of publication of application: **18.04.2018**
(21) Application number: 16811067.4
(22) Date of filing: 09.06.2016
(51) Int. Cl.: G01M 17/00, G07C 5/00, G07C 5/08

(54) **CONTROL SYSTEM FOR VEHICLES COMPRISING AN ON-BOARD DIAGNOSTICS CONNECTION**

(30) Priority: 15.06.2015 ES 201530835
(71) Applicant: Wirelesscities Network S.L., 20009 Donostia - San Sebastian (ES)
(72) Inventor: GONZALEZ JOYE, Juan Carlos, 20115 Astigarraga (Guipuzcoa) (ES)
(74) Representative: Igartua, Ismael
(86) International application number: PCT/ES2016/070438
(87) International publication number: WO 2016/203077

(57) **Abstract**

Control system for vehicles (1) comprising an on-board diagnostics connection, said system comprising a device (2) with a complementary connection that is complementary to the on-board diagnostics connection of the vehicle (1). The device (2) is suitable for wirelessly transmitting the data received through the complementary connection (20) to a remote location and comprises access means for generating at least one Internet access point in the vehicle (1). The system (100) further comprises a software platform (3) configured for controlling and managing the access point/points generated by the device (2), and for establishing communication with the user of the access point.

## Description

### TECHNICAL FIELD

The present invention relates to control systems for vehicles, and more specifically to control systems for vehicles comprising an on-board diagnostics connection.

### PRIOR ART

Vehicle manufacturers' concern about vehicle safety, which may have an impact both on the occupants of the vehicle and on the occupants of other vehicles circulating on the same road, is on the rise.

Most automobile vehicles today incorporate a series of duly distributed sensors communicated with an on-board diagnostics connection for on-board diagnosis, commonly known by the acronym OBD or OBD-II (second generation), such that information relating to said sensors, and therefore relating to the state of safety of the vehicle in question, can be obtained by connecting a diagnostics machine to said connector. Diagnostics machines are found in auto repair shops, so the analysis is performed when the vehicle is brought to one of said shops. The problems the vehicle may have can therefore be detected in a mechanized and automatic manner, i.e., without requiring any highly skilled staff.

However, with these systems, the vehicle must be brought to the corresponding shop to perform the analysis, and this leads to time being wasted both for the shop and for the users of the vehicle, for example. For this reason, there are more and more systems incorporating a device which is connected to the on-board diagnostics connector of the vehicle and wirelessly transmits the received information to a remote diagnostics machine which is in charge of performing the analysis, such as the system disclosed in US20160078692A1, US20030162523A1, US20090265055A1 and ES2228203A1, for example. In the systems disclosed in these patent documents, the information is sent to a remote station to be read remotely (with respect to the vehicle) by the corresponding diagnostics machine.

In the system disclosed in US20090265055A1, for example, access to the on-board diagnostics connection can be obtained wirelessly, and this access is two-way access for the case in which possible repair could be performed remotely.

US20160071333A1 also discloses a device with a complementary connection that is complementary to the on-board diagnostics connection of the vehicle, the device being suitable for wirelessly transmitting the data received through the complementary connection to a remote location. The device comprises a Wi-Fi module configured for providing a communication channel using the Wi-Fi protocol.

### DISCLOSURE OF THE INVENTION

The object of the invention is to provide a control system for vehicles comprising an on-board diagnostics connection, as described below.

The control system is suitable for vehicles comprising an on-board diagnostics connection for on-board diagnosis, commonly known by the acronym OBD (or OBD-II for the second generation), and comprises a device with a complementary connection that is complementary to the on-board diagnostics connection of the vehicle. The device is suitable for wirelessly transmitting the data received through the complementary connection to a remote location, such that the state of a vehicle can be analyzed remotely, without having to bring the vehicle to the shop.

The device comprises access means for generating at least one Internet access point in the vehicle, such that any user thereof (driver or passenger) can access the Internet through said access point. The system further comprises a remote software platform configured for controlling and managing the generated access point and for establishing communication with the user of the access point.

Communication between occupants in the vehicle (user using the Internet in the vehicle through the generated access point) and the software platform can therefore be easily established through the Internet, and this communication can be used to add information both with respect to the vehicle *per se,* and to the safety or even the service offered by said vehicle (which is relevant if the vehicle is a public service vehicle such as a taxi or a bus, for example). For example, a user can report in real time an anomaly that they detect, such as, for example, an anomaly detected by the driver (brakes, direction, etc.), or an anomaly detected by a passenger (blown interior lights, reckless driving, driving under the influence of alcohol, etc.). The system of the invention therefore allows adding, in real time, relevant information, otherwise not taken into account, to the information provided through the information the device receives through the on-board diagnostics connection. Furthermore, as a result of being able to add this additional information, the system may be of interest for other fields, such as fleet management, for example, taking into account more information than the state of the vehicle (or parts of the vehicle) per se.

These and other advantages and features of the invention will become evident in view of the drawings and the detailed description of the invention.

### DESCRIPTION OF THE DRAWINGS

Figure 1 shows a schematic view of an embodiment of the system of the invention.
Figure 2 shows an embodiment of the device of the system of the invention.
Figure 3 schematically depicts the hardware of the device of the system of the invention.

### DETAILED DISCLOSURE OF THE INVENTION

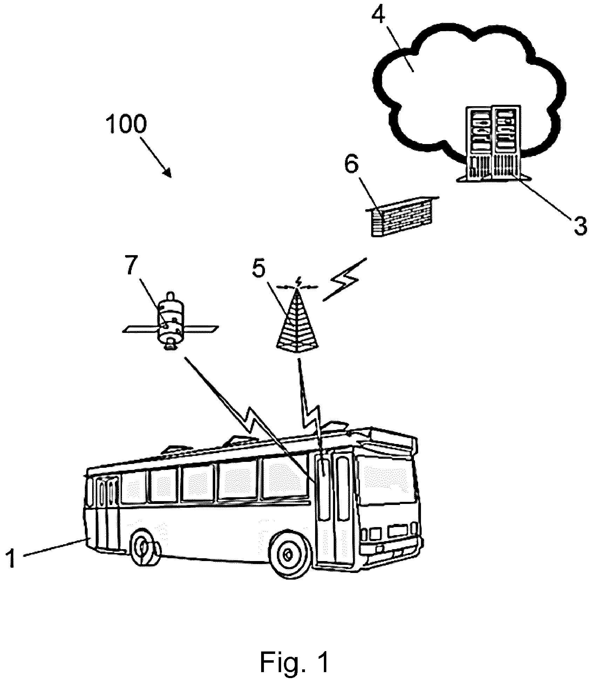

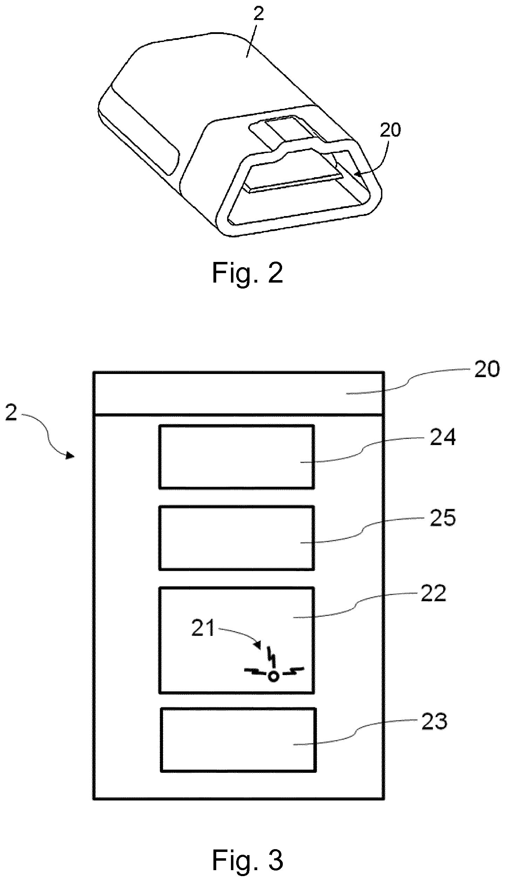

Figure 1 schematically shows an embodiment of the control system 100 of the invention. The system 100 is suitable for vehicles 1 comprising an on-board diagnostics connection for on-board diagnosis, commonly known by the acronym OBD or OBD-II, and comprises a device 2 with a complementary connection 20 that is complementary to the on-board diagnostics connection of the vehicle, like the one shown by way of example in Figure 2. The device 2 is suitable for wirelessly transmitting the data received through the complementary connection 20 to a remote location, by means of generating an Internet access point, such that the state of the vehicle 1 can be analyzed remotely, without having to bring the vehicle to the shop. This access point can operate with a private password, such that it can only be used by people authorized to do so, and the information which is transmitted therethrough can only consulted by authorized personnel.

With reference to Figure 3, the device 2 comprises access means 22 (preferably a Wi-Fi module) for generating at least one Internet access point 21 in the vehicle 1, such that a person traveling in said vehicle 1 can access the Internet through said Internet access point 21, the device 2 acting as a Wi-Fi router in that case.

The system 100 comprises a software platform 3 configured so that the generated Internet access point 21 can be remotely controlled and managed by means of said platform, and so that communication with the user of the Internet access point 21 can be established through said platform. Two-way communication is thereby established between the user (occupants of the vehicle 1) and the software platform 3 which can provide relevant information to the owner or manager of the system 100, and furthermore with the software platform 3, bandwidth consumption can be known and the number of users who can access the Internet through the access point 21 can be limited, for example (or any other parameter of the Internet access point 21 can be configured) to maintain the connection speed and quality of the connected users. This limitation can be established beforehand or in a dynamic manner depending on the actual bandwidth consumption and on if it is deemed appropriate (based on pre-set guidelines, for example). The software platform 3 could furthermore provide one and the same bandwidth to each user, so that all the users can enjoy the same quality of access, for example. The system 100 further comprises an operating system which is integrated in the device 2 and designed for controlling all communications in real time between the device 2 and the software platform 3.

The system 100 is preferably suitable for being used in fleets of vehicles, such as buses, such that the fleet manager may require a plurality of devices 2 (one per vehicle 1). For such uses, the access means 22 of each device 2 are furthermore configured for generating two independent Internet access points (two independent channels), one for the driver of the vehicle 1 and another for the passengers of the vehicle 1, where both channels are two-way channels. The passengers and driver have different needs, and furthermore there may be information that can be transferred only to the driver or to the passengers, as will be discussed below.

If the owner or manager of the system 100 is a fleet manager, for example, said owner or manager can obtain information in real time about the users accessing the Internet in a vehicle 1 (particularly from the passengers), and can even receive information sent by said users. This information can be information relating to aspects that the user was able to reflect in the vehicle 1 itself, aspects relating to the driver's conduct at that precise time (driving under the influence, reckless driving, etc.), or the quality of the service offered by the vehicle (comfort of the transport, etc.). Aspects concerning the vehicle 1, relating to vehicle safety or to other aspects such as the service offered by said vehicle, for example, can therefore be controlled with this additional information and in real time, a more complete and efficient control system 100 for vehicles which does not require complex installations for its implementation (the device 2 is simply connected to the vehicle 1 through the complementary connection 20 by way of a pendrive) being obtained. The device 2 has a size similar to a USB memory pendrive or USB modem, such that its installation in the vehicle 1 is very simple (the complementary connection 20 is simply coupled to the on-board diagnostics connection of the vehicle 1).

The additional information can furthermore include aspects such as user surveys, the number of users connected to the access point 21, bandwidth consumptions of the users, the mobile coverage at each point of the trip, and the positioning of the vehicle 1 at any given time (information which can be received in the device 2 from a GPS satellite 7, for example, with the help of a GPS module 24 incorporated in the device 2 itself).

A way for offering user surveys is explained below by way of example. The Internet access point 21 offers a captive portal to the user who accesses the Internet through it, and the user may be asked to do an optional (or compulsory) survey in the same captive portal, or the corresponding questions may be even be included directly therein. In the captive portal, the user may furthermore be asked to register, such that if it is established that the survey must be completed, one and the same petitioner will not be continuously asked to complete it, rather they will only be asked to answer the questions they did not previously answer (either because they did not answer the questions, or because new questions have been formulated since their last access to the captive portal, either in the same journey or in another later trip).

The software platform 3 is integrated in the cloud 4, the Internet connections in the vehicle 1 therefore being managed through the access point 21 from the cloud 4. This makes processing the information received from the vehicle 1 easier, regardless of the location of the vehicle. Integrating in the cloud 4 furthermore allows the software platform 3 to comprise an integrated application programming interface (API), offering a library to be used by other software. The operation and characteristics of an API are not discussed herein as they are already known in the field. In this case, the software platform 3 is suitable for providing the information it has received to said library, which allows using this data for the desired applications by means of other software. External developers can therefore develop mobile applications that take into account the data available in the library, for example, applications which may be useful for fields, such as insurance companies, shops, etc., rendering the system 100 more applicable and useful.

The use of a software platform 3 in the cloud 4 furthermore allows the proprietor or manager of the system 100 to access the platform through a PC or through a mobile application, for example, by means of a password system, for example. With this access, the manager can adjust the connections of the different users (the bandwidth, for example) and know the number of users who were connected at a given time, connection times, how many users are connected at that time, etc.

To make communication between the user and the software platform 3 easier, said software platform 3 is configured for generating a web (a captive portal) when a user connects to the Internet in the vehicle 1 through the generated access point 21, communication being established between the user and the software platform 3 by means of said captive portal. In addition to controlling who accesses the service (and how many people access it, for example), the captive portal can provide legal terms and conditions of use, for example, information relating to the company owning or managing the system 100, and/or information to be provided by the user (to proceed with the connection, for example), by way of a survey, for example, and as discussed above, the user can be made to provide in a mandatory manner information relating to the vehicle 1 or the service provided by the vehicle as been discussed, where this information will be available to the manager at all times. Therefore, in addition to being able to perform a general analysis with respect to the vehicle 1 in question (or vehicles 1 sharing one and the same service or one and the same fleet), the real time communication allows identifying anomalies in said vehicle 1 in real time, where actions can immediately be taken to solve said anomalies, if necessary (informing the driver, for example).

The device 2 is also configured for transmitting the data received through the complementary connection 20 to the software platform 3, such that information relating to the state of the vehicle 1 incorporating the specific device 2 can also be made available to the owner or manager of the system 100. In a fleet, for example, all the vehicles 1 of the fleet can comprise a device 2, and the manager will be able to access the information of the desired device 2 and configure the desired device 2. Vehicles 1 with an on-board diagnostics connection comprise a plurality of sensors according to the regulations to be applied (for example, the European OBD regulation), providing information relating to the technical aspects of the vehicle, such as data relating to emissions and consumptions, for example. This data is transmitted to the device 2 through the complementary connection 20 and the on-board diagnostics connection of the vehicle 1. In the system 100 of the invention, both the information provided by this data and the information provided by the user can therefore be made available to the proprietor or manager of the system, where a more complete and effective control of the vehicle 1 (and/or of the service offered by said vehicle 1) can be performed in real time. Obtaining information relating to the state of the vehicle 1, i.e., information received in the device 2 through the complementary connection 20 and transmitted to the software platform 3, allows the real-time detection of, for example, poor driving given the weather conditions, where the driver can thus be informed if deemed necessary. Furthermore, this would allow, for example, informing the driver of poor driving or inefficient driving, for example, by means of the corresponding communication channel, in order to correct it. With this information, the manager could also know the time during which the vehicle 1 in question is idling, for example, and can inform the driver to stop the vehicle 1 if said time exceeds a predetermined threshold. Ultimately, the system 100 allows simply and comfortably performing a wide range of operations which may be beneficial for the manager and user, and even for the environment.

The device 2 comprises a control unit 23 (such as a microprocessor, for example) configured for receiving the data the device 1 receives through the complementary connection 20 for encrypting at least part of said data in a specific manner and for sending said encrypted data to the software platform 3, where the software platform 3 is configured for receiving and processing said encrypted data. Information which is transmitted between the device 2 and the software platform 3 can be coded with the encryption, such that it can only be processed if the tools required for performing the process contrary to encryption are available, a feature which the software platform 3 has as it is configured to communicate with said device 2, and therefore comprises the software required for suitably decrypting the information received from said device 2. The control unit 23 can do the same with the information entered by a user.

The control unit 23 is particularly configured for comparing said received data with the data previously stored in said device 2 (in a memory of said device 2, which can be external to the control unit 23 or integrated in said control unit 23) and for selecting which part of said data is relevant depending on said comparison. The data that the device 2 receives through the complementary connection 20 comprises information about the state of a plurality of points of the vehicle 1 (data provided by the sensors, as indicated above), and the stored data also comprises information about the state of said points of the vehicle 1, specifically information relating to the good state of said points. Therefore, as a result of the comparison the control unit 23 can determine which points are in a good state and which are not, and can select only the data that does not reflect a good state for encryption and transmit it to the software platform 3. The data traffic and the information to be processed by the software platform 3 are significantly reduced with this selection, which results in a better overall operation of the system 1.

The control unit 23 is furthermore configured for periodically transmitting the encrypted data to the software platform 3, with a specific time interval between one transmission and the next which can be adjusted depending on the needs and/or requirements set by the proprietor or manager of the system 100, and said time interval can be 20 seconds, for example. Obviously, the shorter the time interval, the greater the data traffic between the device 2 and the software platform 3 will be. The time interval can preferably be parameterized, where it can be adjusted depending on the needs and/or requirements. The adjustment is preferably performed by the manager of the system 100.

The control unit 23 can furthermore be configured for analyzing the encrypted data and for transmitting it to the software platform 3 without waiting out any time interval, if it is determined with the analysis that the encrypted data includes priority information. The priority is established beforehand and may correspond to information relating to safety. Therefore, if it is determined that the information present in the encrypted data may advise stopping the vehicle, for example (based on pre-set guidelines stored in the device, either in an internal memory of the control unit 23 or in an external memory to which said control unit 23 has access), said data is immediately transmitted to the software platform 3 so that it is managed as soon as possible.

To generate an Internet access point 21 in the vehicle 1, a device 2 comprises access means 22 as discussed above. The access means 22, preferably a Wi-Fi module, preferably comprise an M2M card (not shown in the drawings) associated with an Internet service provider (a mobile telephony operator 5, for example), and may comprise a housing (not shown in the drawings) for holding said M2M card (but said M2M card could be integrated in the same device 2, there being no need, for example, to include a housing). Internet access is therefore provided by an Internet service provider, which for the most part assures an Internet connection (depending on the coverage offered said provider) and connection security (through the use of a firewall 6, for example). This type of Internet access technology is already known, so the system 100 can furthermore provide this service in a simple and secure manner. The manager can access all the information relating to the access point 21 (access time of the different users, number of connections, amount of downloaded data, etc.) from the platform 3 and remotely, such that it can use said information to adjust the parameters of the Internet access point 21, such as for example, limiting the amount of data that can be downloaded or the bandwidth, so as not to exceed the amount contracted from the provider (if necessary).

The device 2 can further comprise a memory (not shown in the drawings) where the information which the device 1 receives through the complementary connection 20 is stored, where said memory can be the same memory storing data relating to the good state of a plurality of points of the vehicle 1 or a different memory, and a USB connection (not shown in the drawings) through which said stored information can be accessed. The device 2 can therefore be carried outside of the vehicle 1, and its information can be accessed even when it is not in the vehicle 1. Furthermore, the USB connection can be used to power the device 2 from another device when it is used outside of the vehicle 1, as a wireless Internet access point, for example.

The system 100 can comprise a plurality of devices 2, one device 2 for each vehicle 1, as in the case of a system associated with a fleet of vehicles 1. In this case, the software platform 3 would be configured for controlling and managing the access point 21 generated by each of the devices 2 as discussed above.

As discussed, the device 2 comprises access means 22 for generating an Internet access point 21 in the vehicle 1 (or two where appropriate). Said access means 22 are preferably an integrated Wi-Fi module allowing said generation. As discussed, a manager can configure the Wi-Fi module in a desired manner from the software platform 3 and access all the information of the Wi-Fi module. For example, with reference to the configuration, a user can adjust the downloading and/or uploading speed, the maximum allowed connection time for each user (limited or unlimited); with reference to access, a manager can see the activity of each Internet access point 21 in real time (how many users are connected, for example) or at a later time (how many are connected in a given journey, for example), how much data has been transferred through said Internet access point 21 (and the manager can see, for example, whether or not the contracted limit will be exceeded, where the access point 21 can be configured depending on interests).

For the manager, the two-way communication channel for communication through the access point 21 furthermore allows using said Internet access point 21 like a marketing module, from the software platform 3, with the advantages that it entails. For example, the manager can demand that each user identifies himself/herself through the captive portal in order to use the Internet access point 21. This allows having a user database and furthermore allows knowing, unlike what occurs today, the users in each journey of the vehicle 1 (buses, for example). Furthermore, as discussed above surveys (satisfaction surveys or surveys of any other type) which can be configured by the user by means of the software platform 3 can be done by means of the captive portal.

As discussed, each Internet access point 21 allows two-way communication between the users thereof and the software platform 3. This allows sending information to the user as required, and this information can include advertising or even notifications. An example of a notification can be an arrival delay notice (which may or may not be due to a technical reason), so that the user can use this information as desired (to inform the person who is waiting for them about this delay, for example). The advertising, as a result of the GPS module 24, can furthermore be associated with the specific position of the user connected to the Internet access point 21.

The device 2 further comprises an accelerometer 25 detecting accelerations and decelerations of the vehicle 1. The control unit 23 is communicated with the accelerometer 25, such that it can also send the information obtained by means of said accelerometer 25 to the software platform 3 to make it accessible for the manager.

Ultimately, the firmware used in the system 100 and preferably integrated in the control unit 23 covers the management and control of a plurality of aspects, such as the OBD connection (and the corresponding information), the generation of internet access points and their control and management, and communication between the users of the access point 21 and the software platform 3 itself, for example. The control unit 23 is configured for acting on the access means 22 to adjust the parameters of the access point 21 depending on said firmware. When a user modifies said parameters through the software platform 3, this modification is reflected in the firmware and the control unit 23 acts accordingly.

## Claims

1. Control system for vehicles (1) comprising an on-board diagnostics connection, the system (100) comprising at least one device (2) with a complementary connection (20) that is complementary to the on-board diagnostics connection of the vehicle (1), the device (2) being suitable for wirelessly transmitting the data received through the complementary connection (20) to a remote location, **characterized in that** the device (2) comprises access means (22) for generating an Internet access point (21) in the vehicle (1), the system (100) comprising a software platform (3) configured for controlling and managing the generated access point (21), and for establishing communication with the user of the access point (21).

2. Control system according to claim 1, wherein the software platform (3) is integrated in the cloud (4), the Internet connections in the vehicle (1) being managed through the access point (21) from the cloud (4).

3. Control system according to claim 2, wherein the software platform (3) comprises an integrated application programming interface.

4. Control system according to claim 2 or 3, wherein the software platform (3) is configured for generating a captive portal when a user connects to the Internet in the vehicle (1) through the generated access point (21), communication being established between the user and the software platform (3) by means of said captive portal.

5. Control system according to claim 4, wherein the communication between the user and the software platform (3) by means of said captive portal is two-way communication.

6. Control system according to claim 4 or 5, wherein the communication between the user and the software platform (3) is in real time.

7. Control system according to any of the preceding claims, comprising a plurality of devices (2), one device (2) for each vehicle (1), the software platform (3) being configured for controlling and managing the access point (21) generated by each device (2).

8. Control system according to any of the preceding claims, wherein the device (2) is configured for transmitting the data received through the complementary connection (20) to the software platform (3).

9. Control system according to claim 8, wherein the device (2) comprises a control unit (23) configured for receiving the data that the device (2) receives through the complementary connection (20) for encrypting at least part of said information in a specific manner, and for sending said encrypted data to the software platform (3), the software platform (3) being configured for receiving and processing said encrypted data.

10. Control system according to claim 9, wherein the control unit (23) is configured for processing the data that the device (2) receives through the complementary connection (20), for comparing said data with data stored in said device (2), for selecting which part of said data is relevant depending on said comparison, and for encrypting and sending the part of said data selected as relevant.

11. Control system according to claim 10, wherein the data that the device (2) receives through the complementary connection (20) comprise information about the state of a plurality of points of the vehicle (1), the stored data comprising information of said points of the vehicle (1) reflecting a correct state thereof, and the part of the information of said received data that does not coincide with the corresponding correct state being selected as relevant.

12. Control system according to any of claims 9 to 11, wherein the control unit (23) is configured for periodically transmitting the encrypted data to the software platform (3), with a specific time interval between one transmission and the next.

13. Control system according to claim 12, wherein the time interval can be parameterized, so that it can be adjusted depending on needs and/or requirements.

14. Control system according to claim 12 or 13, wherein the control unit (23) is configured for analyzing the encrypted data and for transmitting it to the software platform (3) without waiting out any time interval, if it is determined with the analysis that the encrypted data comprises priority information.

15. Control system according to any of claims 8 to 14, wherein the device (2) comprises an accelerometer (25) detecting accelerations and decelerations of the vehicle (1) and is communicated with the control unit (23), the control unit (23) being configured for transmitting the information obtained by means of said accelerometer (25) to the software platform (3).

16. Control system according to any of claims 8 to 15, wherein the software platform (3) is configured for allowing the modification of the parameters of the access point (21), the control unit (23) being communicated with the access means (22) and configured for adjusting said parameters depending on the modification introduced through the software platform (3).

17. Control system according to any of the preceding claims, wherein the access means (22) generating the Internet access point (21) in the vehicle (1) comprise a SIM card associated with an Internet service provider, and a housing for holding said SIM card.

18. Control system according to any of claims 1 to 16, wherein the access means (22) generating the Internet access point (21) in the vehicle (1) comprise at least one M2M card associated with an Internet service provider, and a housing for holding said M2M card.

19. Control system according to any of claims 1 to 16, wherein the access means (22) generating the Internet access point (21) in the vehicle (1) comprise at least one integrated M2M card associated with an Internet service provider.

20. Control system according to any of the preceding claims, wherein the device (2) comprises a memory where at least part of the data received through the complementary connection (20) is stored, and a USB connection through which said stored information can be accessed and/or the device (2) can be powered when it is used outside of the vehicle (1) as a wireless Internet access point (21).

21. Control system according to any of the preceding claims, wherein the access means (22) are configured for generating two independent Internet access points (21), each Internet access point (21) being configured for establishing and maintaining two-way communications.
